# EUROPÄISCHE PATENTSCHRIFT

(11) **EP 0 548 704 B1**
(45) Veröffentlichungstag und Bekanntmachung des Hinweises auf die Patenterteilung: **21.02.1996**
(21) Anmeldenummer: 92121116.5
(22) Anmeldetag: 11.12.1992
(51) Int. Cl.: B29C 45/17

(54) **Kunststoff-Spritzgiesseinheit mit Verriegelungseinrichtung für Förderschnecke und Plastifizierzylinder**
Plastic injection moulding unit with locking device for the conveyor screw and the plasticising cylinder
Unité de moulage par injection de matières plastiques avec dispositif de verrouillage pour la vis transporteuse et le cylindre de plastification

(30) Priorität: 24.12.1991 DE 4142928
(43) Veröffentlichungstag der Anmeldung: 30.06.1993
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 283 582
- EP-A- 0 314 943
- DE-B- 1 094 447
- FR-A- 2 450 156

## Beschreibung

Die Erfindung betrifft eine Kunststoff-Spritzgießeinheit mit einer automatisierbaren Einrichtung zum Verriegeln des Plastifizierzylinders und der Förderschnecke nach dem Oberbegriff des Anspruches 1.

Bei einer Kunststoff-Spritzgießeinheit nach der DE-PS 37 35 701 erfolgt die Verriegelung von Plastifizierzylinder und Förderschnecke durch zwei am Trägerblock der Spritzgießeinheit geführte Schieber, die den Plastifizierzylinder an Ausnehmungen festlegen. Mit diesen Schiebern verbunden sind Mitnehmerbrücken, die gleichzeitig eine Verriegelung der Schnecke sicherstellen, wobei bei jedem Betriebszustand eine Verriegelung und Entriegelung gewährleistet ist. Um bei dieser Ausbildung einen sicheren Halt des Plastifizierzylinders am Trägerblock zu gewährleisten, müssen entsprechende Ausnehmungen am Plastifizierzylinder für den Schieber vorgesehen werden, die zu einer Querschnittsverringerung des Plastifizierzylinders in diesem Bereich führen. Schon bei kleinsten Maßabweichungen der Ausnehmungen kann es zu Schwierigkeiten bei der Betätigung kommen, so daß ein großer Aufwand hinsichtlich der Bearbeitung der Ausnehmungen getrieben werden muß.

Es ist auch seit langem, z.B. aus der DE-PS 29 07 557, bekannt, einen Plastifizierzylinder an einem Anschlag des Trägerblocks durch Verschraubung mit einer Mutter zu befestigen und dabei die Förderschnecke in Wirkverbindung mit einem Mitnahmeprofil des Rotationsmotors zu bringen. Allerdings wird die Förderschnecke nicht im Zuge der Verriegelung des Plastifizierzylinders verriegelt. Diese Einrichtungen sind bisher einer Automatisierung nicht zugänglich. Probleme ergeben sich dabei auch beim Lösen eines Plastifizierzylinders, wenn er über einen längeren Zeitraum eingesetzt worden ist, infolge von Verbackungen zwischen Trägerblock und Plastifizierzylinder, die nur unter großem Kraftaufwand mit schwerem Werkzeug, gegebenenfalls nur mit Schlägen auf Werkzeug und somit auf den Plastifizierzylinder gelöst werden kann.

Ausgehend von diesem Stand der Technik liegt der Erfindung die Aufgabe zugrunde, eine Kunststoff-Spritzgießeinheit der eingangs genannten Gattung derart weiterzubilden, daß auf einfache Weise eine zuverlässige automatisierbare Ent- und Verriegelung von Plastifizierzylinder und Förderschnecke an der Spritzgießeinheit verwirklicht werden kann.

Diese Aufgabe wird durch die im Anspruch 1 genannten Merkmale gelöst.

Bei einer solchen Ausbildung wird der Plastifizierzylinder mit einem Gewinde mit üblichen Maßtoleranzen versehen. Der Plastifizierzylinder kann somit auf einfachste Weise ohne Querschnittsverringerung hergestellt werden und steht mit dem gesamten Querschnitt über seine volle Länge zur Verfügung, so daß kritische Spannungsbereiche im Bereich von Ausschnitten wirksam vermieden sind. Bedarfsweise kann sogar der Wandungsdurchmesser des Plastifizierzylinders herabgesetzt werden, wodurch die für die Plastifizierung des Kunststoffes erforderliche Wärmeenergie schneller und effektiver an veränderte Umstände angepaßt werden kann.

Grundsätzlich ergibt sich damit aber auch die Möglichkeit einer Nachrüstung älterer Maschinen, die nur für eine Verschraubung des Plastifizierzylinders vorgesehen sind. Während nach einer Automatisierung einer solchen Maschine der Kunde seine bisher verwendeten Plastifizierzylinder an die veränderten Umstände anpassen mußte, so besteht nunmehr die Möglichkeit, die alten Plastifizierzylinder weiter zu verwenden oder bedarfsweise von Maschine zu Maschine zu wechseln.

Dabei werden durch den Antrieb die grundsätzlichen Voraussetzungen für eine spätere Automatisierung geschaffen, da ganz nach Kundenwunsch der Antrieb zunächst nur für eine manuelle Bedienung geeignet ausgeliefert und zu einem späteren Zeitpunkt problemlos durch einen entsprechenden Motor einer Automatisierung zugänglich gemacht werden kann. Somit kann also zunächst eine Maschine nur mit einer einfachen Verschraubung ausgestattet werden, die dann zunächst durch einen ersten Modul mit einem manuellen Antrieb ausgerüstet werden kann, der seinerseits durch einen zweiten Modul mit einem der Automatisierung zugänglichen Antrieb ergänzt werden kann. Der Kunde kann also von Modul zu Modul seine Ver- und Entriegelungseinrichtung bis zu einer vollautomatischen Ver- und Entriegelungseinrichtung ausbauen. Dabei ist bereits der manuell angetriebene Spindeltrieb oder der manuell angetriebene Schneckentrieb in der Lage, die Mutter selbst bei Verbackungen wirksam und effektiv zu lösen, da durch einen entsprechenden Steigungswinkel des Spindeltriebs große Kräfte aufgebracht werden können.

Wie bei einem Baukastensystem können Zylinder und Mutter von Maschine zu Maschine ausgetauscht werden, und es besteht außerdem sogar aus Herstellersicht der Vorteil, daß die am Ende des Plastifizierzylinders zum Spannen angeordnete Mutter hinsichtlich ihres Gewindes mit der Mutter identisch ist, die am vorderen Ende des Plastifizierzylinders für die Festlegung der Düse benötigt wird. Die Plastifizierzylinder sind dann aber auch umso eher einer Oberflächenhärtung zugänglich.

Bei einer Ausbildung nach den Ansprüchen 4 und 5 erfolgen die Bewegungen des Antriebs gegen die Kraft einer Feder, die solange in ihrer Ruheposition verbleibt, bis das Anziehen der Mutter nahezu vollständig erfolgt ist. Wenn in diesem Moment dann die Kraft ansteigt und über der Kraft der Feder liegt, oder gemäß Anspruch 6 über dem Widerstand eines Reibbolzens, so kommt es zu einer Axialbewegung, die für die Entriegelung der Förderschnecke im Plastifizierzylinder, die Verriegelung der Förderschnecke am Rotationsmotor und bedarfsweise für die Ankupplung einer Betätigungsstange für eine Düsennadel ausgenutzt wird. Beim Entriegeln ist die Feder in der Lage, die Öffnungsbewegung zu unterstützen, wenngleich zunächst der Widerstand des Reibbolzens zu überwinden ist, und es kommt somit zu einem Losreißeffekt. Die Federn stellen aber auch die Wirkverbindung zwischen Spindeltrieb und Verzahnung der Mutter nach längeren Laufzeiten sicher, da selbst, wenn diese Teile verschlissen sind, durch die Kraft der Feder eine Verbindung gewährleistet ist.

Bei einer Gestaltung gemäß den Ansprüchen 8 und 9 wird trotz einfacher Montage eine sichere Betätigung der Axialverriegelung der Förderschnecke mit dem Mitnahmeprofil sichergestellt. Das Kuppeln erfolgt dabei stets gegen die Kraft der Federn und die Verriegelung kann ergänzend durch eine entsprechende Ausgestaltung der Mitnehmerbrücke dadurch erleichtert werden, daß die Schieber über Bolzen gesteuert werden, die nur in einer bestimmten Stellung ausrückbar sind, um ein unbeabsichtigtes Lösen der Verbindung zu vermeiden.

Der weitere Schieber nach Anspruch 11 gewährleistet, daß auch beim Transport der Plastifiziereinheit die Förderschnecke im Plastifizierzylinder verriegelt ist. Durch die Sicherungsbolzen gemäß den Ansprüchen 12 und 13 wird sichergestellt, daß eine Verriegelung der Schnecke und somit der Axialhub erst dann durchgeführt wird, wenn tatsächlich der Plastifizierzylinder voll und ganz am Trägerblock festgelegt ist.

Weitere vorteilhafte Ausbildungen ergeben sich aus den Unteransprüchen. Im folgenden wird die Erfindung an einem Ausführungsbeispiel näher erläutert. Es zeigen:
- Fig. 1: die mit der Verriegelungseinrichtung versehene Spritzgießeinheit in einer Aufsicht bei verriegeltem Plastifizierzylinder,

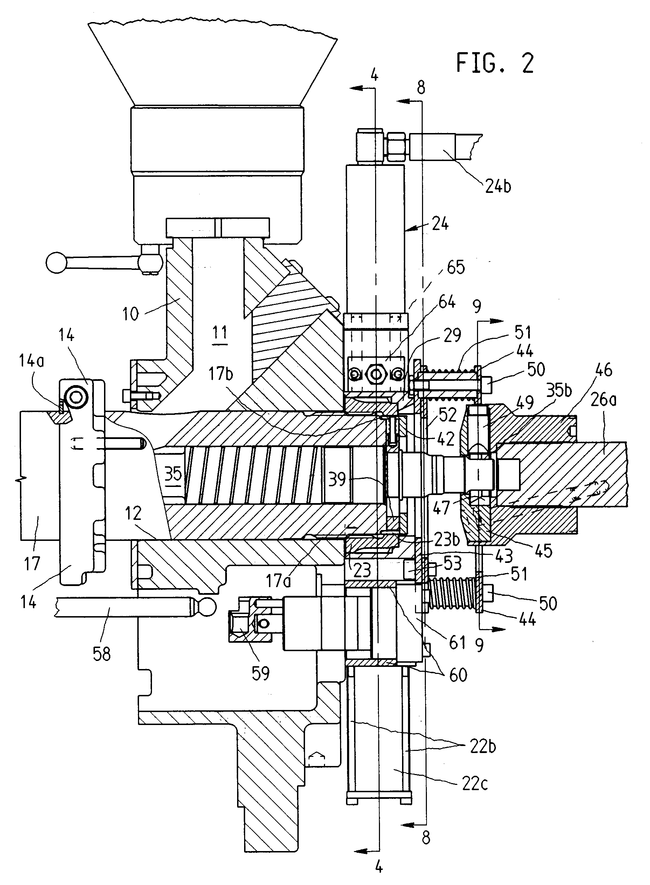

- Fig. 2, 3: einen vergrößerten Ausschnitt eines vertikalen Schnittes durch die Spritzachse s-s im Bereich der Verriegelungseinrichtung nach Beendigung und vor Einleitung der Verriegelungsbewegung,
- Fig. 4, 5: einen vertikalen Schnitt gemäß Linie 4-4 bzw. 5-5 von Fig. 2 bzw. 3,
- Fig. 6: einen vertikalen Schnitt gemäß Linie 6-6 von Fig. 3,
- Fig. 7: eine Darstellung gemäß Fig. 6 bei entriegelter Förderschnecke,
- Fig. 8: einen vertikalen Schnitt gemäß Linie 8-8 von Fig. 2,
- Fig. 9,10: einen vertikalen Schnitt gemäß Linie 9-9 bzw. 10-10 von Fig. 2 bzw. Fig. 3,
- Fig. 11,12: Darstellungen gemäß Fig. 9,10, wobei Sicherungsbolzen zur Betätigung der Schieber eingesetzt sind,
- Fig. 13: eine Darstellung gemäß Fig. 12 in einer um 45° gedrehten Anordnung der Schieber.

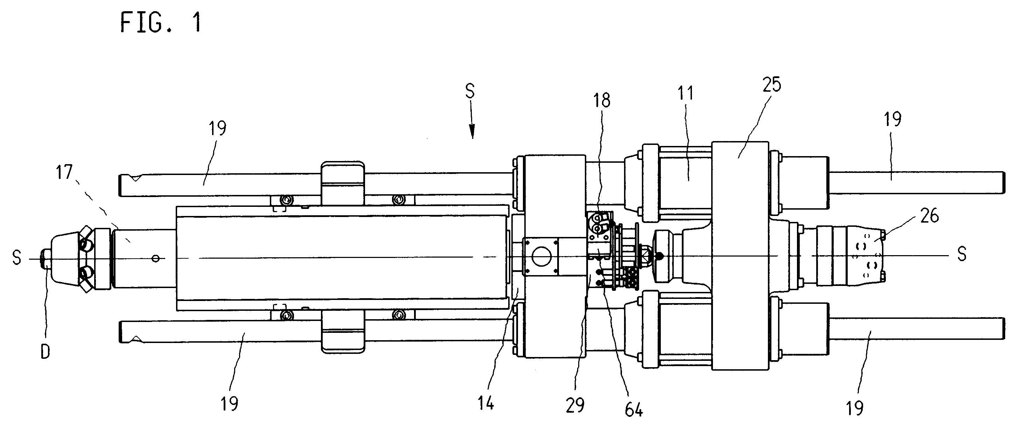

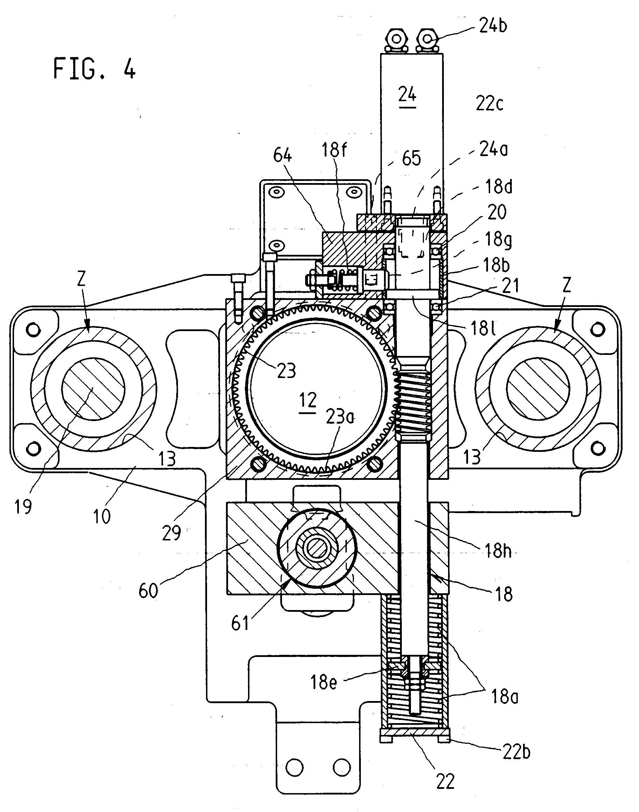

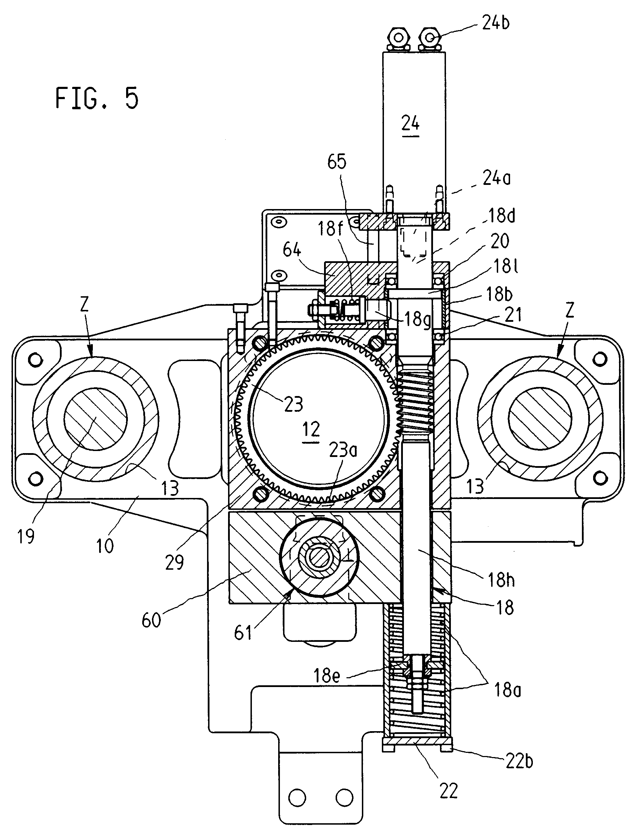

Die mit der Verriegelungseinrichtung ausgerüstete Spritzgießeinheit umfaßt einen den Plastifizierzylinder 17 aufnehmenden Trägerblock 10 mit Zuführkanälen 11 für das Kunststoffmaterial. Wie aus den Figuren 4, 5 in Verbindung mit Fig. 1 ersichtlich, sind in Zylinderaufnahmen 13 Hydraulikzylinder Z zum axialen Verschieben der Spritzgießeinheit auf Führungssäulen 19 einfügbar. Der Plastifizierzylinder ist für eine relative axiale Bewegung im Trägerblock 10 in einer zentralen Bohrung 12 gelagert, wobei der entriegelte Plastifizierzylinder 17 nach axialer Arretierung durch eine begrenzte Rückwärtsbewegung des Trägerblockes im Gefolge eines Rückwärtshubes der Hydraulikzylinder Z aus der zentralen Bohrung 12 des Blockes freigesetzt und sodann im Rahmen eines Wechsels abtransportiert wird.

Die Förderschnecke 35 ist mit Hilfe eines Mitnahmeprofils mit dem Rotationsmotor 26 verbindbar und hydraulisch mit Zylinder Z zum Einspritzen des Kunststoffes über eine Einspritzbrücke 66 axial verschiebbar. Um dabei überhaupt eine Verriegelung zu ermöglichen, besitzt die Förderschnecke eine den Rotationsmotor 26 auf Stillstand steuernde Orientierungseinrichtung, wie sie z.B. aus der gattungsbildenden DE-PS 37 35 701 bekannt ist. Eine Betätigung und Bewegung der Spritzgießeinheit mitsamt der Verriegelungseinrichtung kann jedoch auch nicht hydraulisch, sondern z.B. elektrisch erfolgen.

Der Plastifizierzylinder 17 ist am Trägerblock über eine Gewindeverbindung festlegbar. Zu diesem Zweck besitzt der Plastifizierzylinder 17 ein Verriegelungsgewinde 17a, das symmetrisch zur Spritzachse am Plastifizierzylinder gelegen ist. Mit diesem Verriegelungsgewinde 17a steht eine Mutter 23 in Verbindung, die über einen Antrieb betätigt wird, so daß der Plastifizierzylinder am Trägerblock an einem Anschlag festlegbar ist. Nach erfolgter Verriegelung des Plastifizierzylinders erfolgt die endgültige Verriegelung der Förderschnecke 35. Als Antrieb wird vorzugsweise ein Spindeltrieb oder ein Schneckengetriebe 18 vorgesehen, jedoch kann auch jeder andere Antrieb eingesetzt werden, der es möglich macht, die Mutter an ihrem Umfang anzutreiben. Der Spindeltrieb 18 greift in eine Verzahnung 23a der Mutter 23 und wird von einem Hydromotor 24 angetrieben. Es versteht sich von selbst, daß jedoch auch jedes andere Antriebsprinzip elektrisch, pneumatisch oder wie auch immer geartet für den Antrieb des Spindeltriebs eingesetzt werden kann. In ihrem hinteren Teil liegt die Mutter mit einem Anlagebereich 23b unmittelbar an einem Führungsbereich 17b des Plastifizierzylinders an.

Der Spindeltrieb besteht außer der Spindel aus zwei am unteren Ende der Spindel angeordneten, die Spindel umschließenden Federn 18a. Zwischen den Federn ist das Ende der Spindel 18h in einer Platte gedämpft gelagert. Dadurch ist es möglich, daß die Vertikalbewegung nicht zu Schäden am Antrieb oder der Mutter führen kann. Um darüber hinaus eine Axialbewegung des Spindelantriebs erst bei Überschreiten einer bestimmten Kraft zu ermöglichen, ist oberhalb des Gehäuses 29 ein Gehäuse 64 für ein Reibelement 18g vorgesehen. Dieses Reibelement 18g durchdringt eine Hülse 18b, in der eine Betätigungsplatte 18l axial beweglich verschiebbar ist. Wie aus Fig. 4 ersichtlich, befindet sich vor Beendigung des Anziehens der Mutter die Betätigungsplatte 18l unterhalb des Betätigungsbolzens 18g. Durch seine federnede Aufhängung mittels Feder 18f, die auf eine vorbestimmte Kraft eingestellt ist, kann bei Übersteigen der Kraft der Feder 18f der Reibbolzen 18g durch die Betätigungsplatte 18l in den Figuren nach links gedrückt werden, so daß die Platte 18g von einer Stellung gemäß Fig. 4 in eine oberhalb des Betätigungsbolzens 18g liegende Stellung gemäß Fig. 5 überführt wird. Diese Anordnung hat den Vorteil, daß sowohl beim Anziehen als auch beim Lösen vorbestimmte Kräfte erforderlich sind, bevor eine Axialbewegung stattfindet.

In dieser Grundausführung kann die Verriegelungseinrichtung auch noch manuell bedient werden, wenn zu diesem Zweck im Deckel 22c eine Öffnung vorgesehen wird, durch die die Spindel 18h des Spindeltriebs 18 manuell betätigt werden kann. Bei dieser Ausführung handelt es sich um einen ersten Modul, der bedarfsweise zu einem späteren Zeitpunkt automatisiert werden kann, falls der Kunde bei Kauf der Einrichtung den finanziellen Aufwand einer vollautomatisierten Verriegelungseinrichtung scheut. Die Spindel ist an Lagern 20,21 gelagert.

Bei der Verriegelungsbewegung findet eine Blockierung der Mutter 23 statt und durch diese Axialbewegung, im konkreten Ausführungsbeispiel eine Hubbewegung, wird zugleich die Förderschnecke im Plastifizierzylinder entriegelt, die Förderschnecke mit dem Rotationsmotor gekuppelt und bedarfsweise eine Betätigungsstange 58 für die Düsennadel der Düse D angekuppelt, indem sie mit ihrem kugelförmigen Ende in einen Kugelkäfig 59 gelangt. Zur weiteren Betätigung der Düsennadel ist in der Zylinderaufnahme 60 ein Zylinder 61 aufgenommen. Das Gehäuse 22 für den Spindeltrieb 18 besteht aus einer Stahlhülse mit Deckel 22c. Die Teile des Gehäuses sind durch Bolzen 22b an der Zylinderaufnahme 60 befestigt.

Die Spindel kann auch über einen Hydromotor 24 oder einen auf eine andere Weise angetriebenen Motor angetrieben werden. Zu diesem Zweck besitzt der Hydromotor 24 einen Schaft 24a, der in eine Aufnahme 18d der Spindel eintaucht. Somit ergibt sich eine Antriebseinheit A, die als bauliche Einheit der Axialbewegung zugänglich ist, wobei der Hydromotor gegen Rotation durch die Verdrehsicherung 65 am Gehäuse 64 gesichert ist.

Bei der durch die Mutter 23 ausgelösten Verriegelungsbewegung des Plastifizierzylinders gelangt im konkreten Ausführungsbeispiel ein den Plastifizierzylinder 17 umgreifender Distanzring 14, der mit dem Plastifizierzylinder über einen Sicherungsring 14a fest verbunden ist, in Anlage auf der der Mutter 23 abgewandten Seite des Trägerblocks 10. Grundsätzlich ist es jedoch auch möglich, statt dieser ziehenden Bewegung eine drückende Bewegung auszuführen, also einen Anschlag auf der anderen Seite des Trägerblockes 10 vorzusehen.

Um nun die Verriegelungsbewegung einleiten zu können, ist es erforderlich, daß das Verriegelungsgewinde 17a mit der Mutter 23 in Wirkverbindung treten kann. Zu diesem Zweck wird die gesamte Spritzgießeinheit bis zu einer Indexierung nach vorne gefahren, dort wird der Plastifizierzylinder dann so gehalten, daß bei Fortsetzung dieser Bewegung eine Relativbewegung zwischen dem axial beweglich in der zentralen Bohrung 12 gelagerten Plastifizierzylinder 17 und dem Trägerblock 10 erfolgt. Durch diese Relativbewegung entsteht der für den Eingriff der Mutter anfänglich erforderliche Anpreßdruck. Grundsätzlich kann jedoch dieser Anpreßdruck auch auf andere Weise aufgebracht werden, indem z.B. an geeigneter Stelle Federn vorgesehen werden.

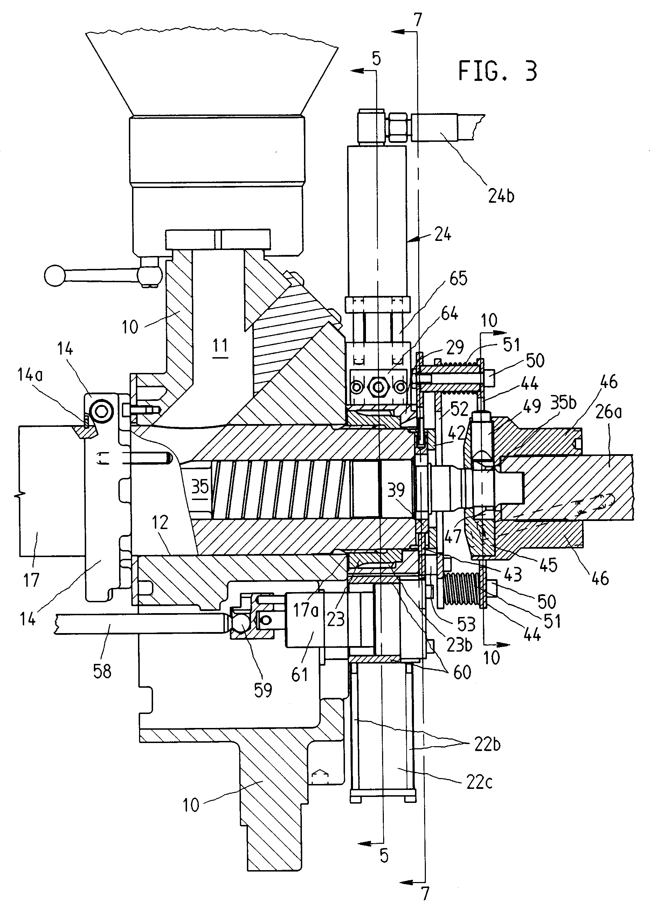

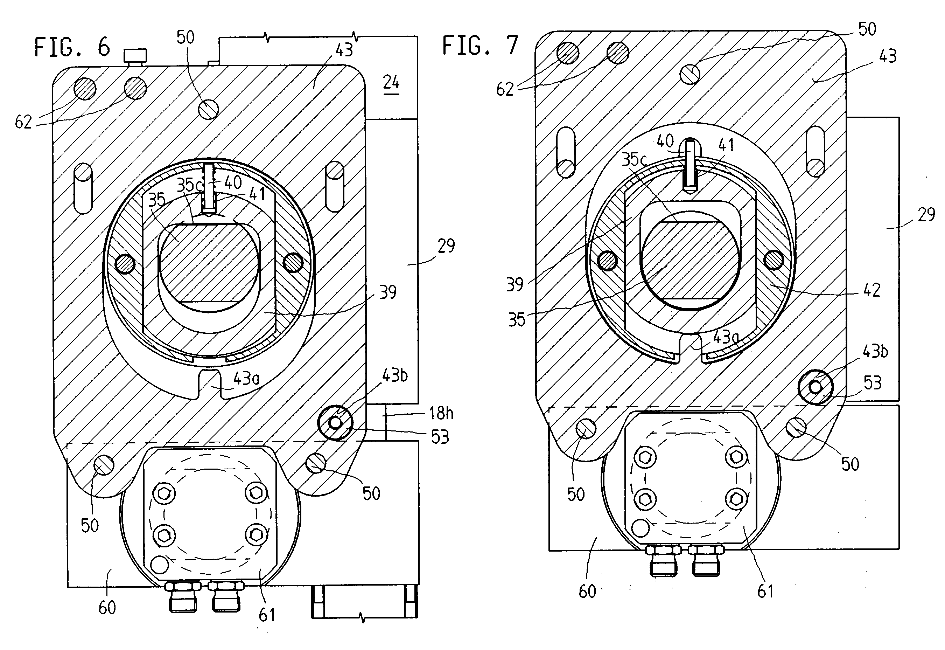

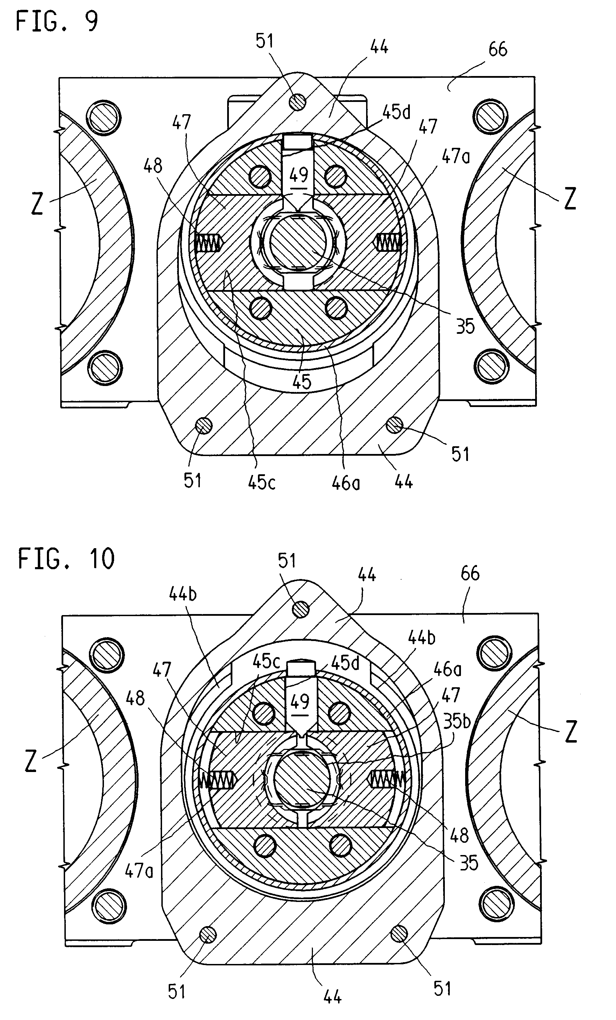

Im folgenden werden die mit dem Spindelantrieb oder mit dem Schneckengetriebe verbundenen Teile anhand der Fign. 3,6-13 näher beschrieben. Der Spindelantrieb ist mit Mitnehmerbrücken 43 und 44 verbunden, die diverse Schieber antreiben. Die Mitnehmerbrücke 44 betätigt zwei radial geführte, mit der Förderschnecke rotierende Schieber 47. Wie aus den Figuren 9-13 ersichtlich, sind die Schieber 47 diametral zur Achse s-s angeordnet und an Führungsflächen 45c des Führungselements 45 geführt. Die radial verschiebbaren Schieber sind zum axialen Kuppeln mittels Federn 48 in eine radiale Ausnehmung 35b der Förderschnecke 35 einsteuerbar. Gleichzeitig taucht das Ende der Förderschnecke in eine weitere Radialkupplung ein. Am Führungselement ist ferner eine Ausnehmung 45b für einen Spreizkeil 49 vorgesehen. Der Spreizkeil wird von der Mitnehmerbrücke 44 an seinem einen Ende betätigt und veranlaßt aufgrund seines konisch geformten anderen Endes ein Auseinanderspreizen der beiden Schieber 47, und damit eine Freisetzung der Förderschnecke. Das Führungselement 45 ist dabei in der Aufnahme 46 gelagert.

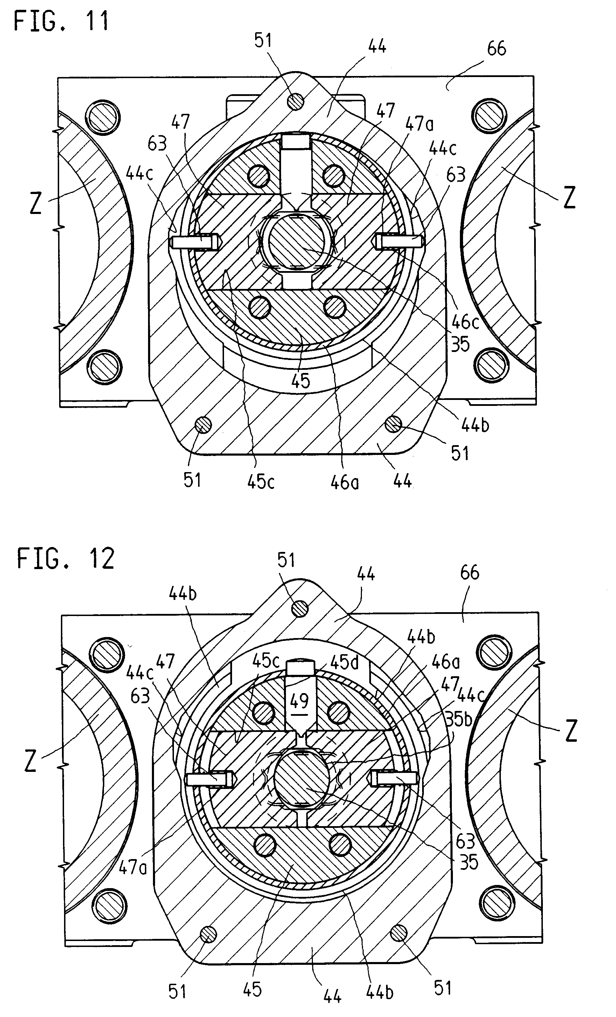

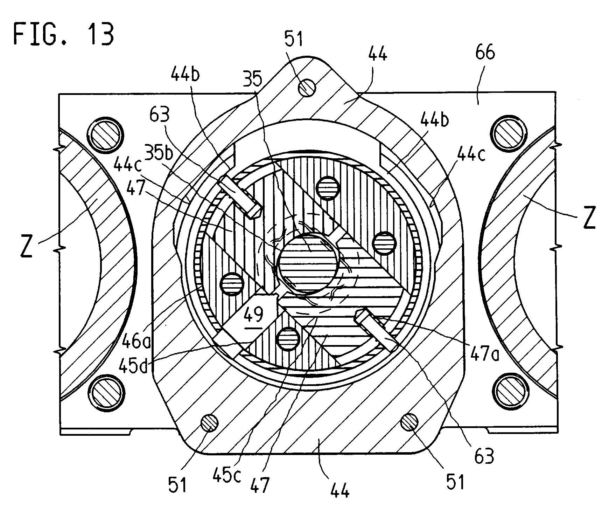

In den Figuren 11-13 ist eine weitere Ausführungsform der Schneckenverriegelung dargestellt, bei der die Schieber durch Sicherungsbolzen 63 betätigt werden. Die Sicherungsbolzen durchgreifen eine Ausnehmung 46c in der Wandung 46a der Aufnahme. Sie können nur in einer vorbestimmten Stellung in Ausnehmungen 44c der Mitnehmerbrücke 44 ausgerückt werden, wie sich insbesondere aus Figur 11 ergibt. Im restlichen Bereich sind sie an Laufkanten 44b so geführt, daß eine Verriegelung sichergestellt ist. Wie insbesondere aus Figur 13 ersichtlich, sind die Sicherungsbolzen an diesen Laufkanten geführt und auch der aufgrund der Rotationskräfte nach außen fliehende Spreizkeil 49 ist gehalten.

Die Verriegelungseinrichtung besitzt aber zur gleichzeitigen Verriegelung von Plastifizierzylinder 17 und Förderschnecke 35 weitere Verriegelungsorgane. Diese Verriegelung dient der axialen Festlegung der Förderschnecke im Plastifizierzylinder, insbesondere für einen Transport außerhalb der Spritzgießeinheit.

Dazu ist ein weiterer Schieber 39 in einer rückseitigen Führungsnut des Plastifizierzylinders 17 begrenzt radial verschieblich gelagert. Dieser Schieber greift unter der Wirkung einer Feder 41 in eine korrespondierende Ausnehmung 35c der Förderschnecke 35 ein. Die Führungsnut ist dabei von einem Deckel 42 abgedeckt, der das rückwärtige Ende des Plastifizierzylinders 17 übergreift. Der Schieber 39 wird dabei über die weitere Mitnehmerbrücke 43 auf zwei Seiten betätigt. Der Schieber wird unter der Wirkung der Feder 41 in Verriegelungsposition gehalten, die als Schraubenfeder ausgebildet und am Deckel 42 widergelagert ist. Sie umschließt den in einer Sacklochbohrung des weiteren Schiebers 39 aufgenommenen Stift 40. Auf der anderen Seite ist der Schieber über eine Nase 43a betätigbar.

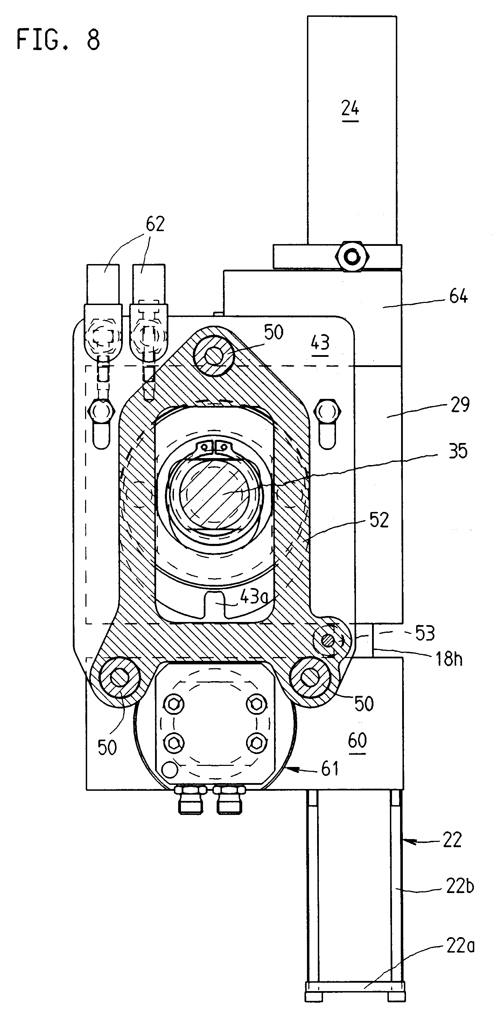

Die Mitnehmerbrücken 43, 44 sind über Bolzen 50 miteinander verbunden, an denen auch ein Zwischenblech 52 befestigt ist. Am Zwischenblech sind Sicherungsbolzen befestigt, die die Axialbewegung des Antriebs erst bei vollständiger Anlage der Mutter am Trägerblock 10 gestatten. Beim Anziehen der Mutter tritt das Ende des Plastifizierzylinders 17 aus dem Trägerblock heraus und drückt dabei das Zwischenblech 52 von der Mitnehmerbrücke 43 weg (Fig. 8). Dabei wird das Zwischenblech 52 durch Federn 51 in Anlage mit dem Ende des Plastifizierzylinders gehalten. Sobald die Sicherungsbolzen dann über die Mitnehmerbrücke 43 nach hinten heraustreten, ist die axiale Bewegung möglich und die bereits beschriebenen Ver- und Entriegelungsbewegungen können erfolgen.

Mit dem Bezugszeichen 62 sind Signalschalter gekennzeichnet, die ein elektronisch zu verarbeitendes Signal an die Steuereinrichtung der Maschine abgeben, sofern die Verriegelung stattgefunden hat. Der Hydromotor besitzt Hydraulikanschlüsse 24b. Der Reibbolzen 18g ist quer zur Spindelachse angeordnet. Die dargestellten Hydraulikzylinder sind durch ineinandergeschachtelte Fahr- und Einspritzzylinder gebildet, wobei die Einspritzzylinder über eine Einspritzbrücke 66 miteinander verbunden sind.

## Patentansprüche

1. Kunststoff-Spritzgießeinheit (S) mit einer automatisierbaren Einrichtung zum Verriegeln des axial beweglichen Plastifizierzylinders (17) und der Förderschnecke (35) mit dem Trägerblock (10) der Spritzgießeinheit (S) bzw. mit einem Rotationsmotor (26) für die Förderschnecke, die zur Wirkverbindung mit einem Mitnahmeprofil des Rotationsmotors verbindbar und zum Einspritzen des Kunststoffes axial verschiebbar ist,
dadurch gekennzeichnet, daß der Plastifizierzylinder (17) am Trägerblock (10) über eine symmetrisch zur Spritzachse (s-s) gelegene Gewindeverbindung mittels einer über einen Antrieb an ihrem Umfang betätigten Mutter (23) an einem Anschlag festlegbar ist und im Gefolge der Verriegelung des Plastifizierzylinders (17) die Verriegelung der Schnecke (35) erfolgt.

2. Spritzgießeinheit nach Anspruch 1, dadurch gekennzeichnet, daß nach der Verriegelung des Plastifizierzylinders (17) durch das Anziehen der Mutter (23) die Entriegelung der mittels hydraulischer Zylinder (Z) verschiebbaren Förderschnecke (35) im Plastifizierzylinder (17) und die Verriegelung der Förderschnecke (35) mit dem Rotationsmotor (26) erfolgt.

3. Spritzgießeinheit nach Anspruch 1 oder 2, dadurch gekennzeichnet, daß als Antrieb ein Spindeltrieb oder ein Schneckengetriebe (18) vorgesehen ist, der in eine Verzahnung (23a) der Mutter (23) eingreift, von einem Motor angetrieben ist und die Mutter (23) auf einem Verriegelungsgewinde (17a) des Plastifizierzylinders bewegt.

4. Spritzgießeinheit nach Anspruch 3, dadurch gekennzeichnet, daß der Spindeltrieb gegen die Kraft wenigstens einer Feder (18a,18f) axial beweglich gelagert ist, die bei Überschreiten der Kraft der Feder infolge einer Axialbewegung des Spindeltriebs unter Blockierung der Mutter komprimiert wird.

5. Spritzgießeinheit nach Anspruch 3 oder 4, dadurch gekennzeichnet, daß der senkrecht stehende Spindeltrieb (18) mit dem Motor (Hydromotor 24) eine bauliche Einheit bildet, die bei der durch die Lagerung eines Dämpfungselementes (18e) zwischen zwei Federn gedämpften Kompression der Feder eine axiale Hubbewegung durchführt, wodurch gleichzeitig die Verriegelung der Förderschnecke (35) mit dem Rotationsmotor (26), die Entriegelung der Förderschnecke (35) im Plastifizierzylinder (17) und bedarfsweise die Verriegelung einer Betätigungsstange (58) für eine Düsennadel einer Düse (D) erfolgt.

6. Spritzgießeinheit nach einem der vorhergehenden nach einem der vorhergehenden Ansprüche, dadurch gekennzeichnet, daß die Axialbewegung des Spindeltriebs (18) bei Überschreiten der Kraft einer Feder (18f) eines Reibbolzens (18g) erfolgt, sobald eine mit der Spindel (18h) des Spindeltriebs (18) verbundene Betätigungsplatte (18l) den quer zur Spindel (18h) angeordneten Reibbolzen außer Eingriff bringt.

7. Spritzgießeinheit nach einem der vorhergehenden Ansprüche, dadurch gekennzeichnet, daß als Anschlag ein den Plastifizierzylinder (17) umgreifender Distanzring (14) vorgesehen ist, der auf der der Mutter (23) gegenüberliegenden Seite des Trägerblockes (10) angeordnet ist und an einem nur geringfügig in die Wandung des Plastifizierzylinders eingreifenden Sicherungsring (14a) gehalten ist.

8. Plastifizierzylinder nach einem der vorhergehenden Ansprüche, dadurch gekennzeichnet, daß im Bereich des Mitnahmeprofils des Rotationsmotors (26) wenigstens ein radial geführter, rotierbarer Schieber (47) angeordnet ist, der durch die Axialbewegung des Antriebs über eine Mitnehmerbrücke (44) in Verriegelungsstellung überführbar ist.

9. Spritzgießeinheit nach Anspruch 8, dadurch gekennzeichnet, daß zwei in einem Führungselement (45) diametral angeordnete Schieber (47) radial verschiebbar sind, die mittels Federn (48) in eine radiale Ausnehmung (35b) der Förderschnecke (35) einsteuerbar und mittels eines radial geführten Spreizkeils (49) außer Kupplungsstellung bringbar ist, der von der Mitnehmerbrücke betätigt ist.

10. Spritzgießeinheit nach Anspruch 8 oder 9, dadurch gekennzeichnet, daß die Schieber (47) über Sicherungsbolzen (63) betätigbar sind, die durch die Wandung (46a) einer Aufnahme (46) hindurchtreten, wobei sie bei verriegelter Förderschnecke während der Rotationsbewegung auf nahezu der gesamten Strecke an Laufkanten (44b) geführt sind, während sie in Entriegelungsstellung in Ausnehmungen (44c) der Mitnehmerbrücke eintauchen.

11. Spritzgießeinheit nach einem der vorhergehenden Ansprüche, dadurch gekennzeichnet, daß ein weiterer Schieber (39) am Plastifizierzylinder (17) radial verschieblich gelagert ist, und bei der Abwärtsbewegung des Spindeltriebs (18) über eine Mitnehmerbrücke (43) kraft einer Feder (41) die Förderschnecke (35) durch Anlage an einer Ausnehmung (35c) axial und radial im Plastifizierzylinder verriegelt.

12. Spritzgießeinheit nach einem der vorhergehenden Ansprüche, dadurch gekennzeichnet, daß wenigstens ein Sicherungsbolzen (53) vorgesehen ist, der bei vollständiger Anlage der Mutter (23) am Trägerblock (10) die Axialbewegung des Antriebs gestattet.

13. Spritzgießeinheit nach Anspruch 12, dadurch gekennzeichnet, daß der axial bewegliche Sicherungsbolzen (53) mit dem Plastifizierzylinder (17) über ein Zwischenblech (52) verbunden ist und die axiale Bewegung des Plastifizierzylinders (17) beim Spannen der Mutter (23) den Sicherungsbolzen (53) aus seiner Sperrposition über das Zwischenblech (52) bringt, das zwischen den über Bolzen (50) miteinander verbundenen Mitnehmerbrücken (43, 44) vorgesehen ist, an dem der Sicherungsbolzen (53) angeordnet ist und das durch die Kraft einer Feder (51) in Anlage mit dem Ende des Plastifizierzylinders (17) gehalten ist.

## Claims

1. Plastic injection-moulding unit (S) with an automatable arrangement for the locking of the axially moveable plasticising cylinder (17) and of the feed worm (35) with the carrying block (10) of the injection-moulding unit (S) or with a rotary motor (26) for the feed worm, which can be connected to make an effective connection with a driving profile of the rotary motor and is axially moveable for the injection of the plastic,
characterised in that the plasticising cylinder (17) on the carrying block (10) can be fixed to a stop means via a threaded connection placed symmetrically to the injection axis (s-s) by means of a nut (23) activated by a drive on its perimeter and the locking of the plasticising cylinder (17) leads to the locking of the worm (35).

2. Injection-moulding unit according to claim 1, characterised in that after the locking of the plasticising cylinder (17) through the tightening of the nut (23) the unlocking of the feed worm, which is adjustable by means of hydraulic cylinders (Z), and the locking of the feed worm with the rotary motor occur.

3. Injection-moulding unit according to claim 1 or 2, characterised in that a spindle drive or worm gearing (18) is provided as drive, which meshes in a toothing (23a) of the nut (23), is driven by a motor and moves the nut (23) on a locking thread (17a) of the plasticising cylinder.

4. Injection-moulding unit according to claim 3, characterised in that the spindle drive is positioned axially moveably against the force of at least one spring (18a, 18f), which, when the strength of the spring is exceeded as a result of an axial movement of the spindle drive, is compressed, with tightening of the nut.

5. Injection-moulding unit according to claim 3 or 4, characterised in that the vertically positioned spindle drive(18) forms, with the motor (hydraulic motor 24), a constructional unit, which on the compression of the springs, damped by the positioning of a damping element (18e) between two springs, carries out an axial stroke movement, resulting at the same time in locking of the feed worm (35) with the rotary motor (26), unlocking of the feed worm (35) in the plasticising cylinder (17) and if required locking of a control rod (58) for an injector needle of a nozzle (D).

6. Injection-moulding unit according to one of the preceding claims, characterised in that the axial movement of the spindle drive (18), when the force of the spring (18f) of a friction stud (18g) is exceeded, occurs as soon as a control plate (18l) connected to the spindle (18h) of the spindle drive (18) throws the friction stud, which is positioned at right angles to the spindle (18h), out of engagement.

7. Injection-moulding unit according to one of the preceding claims, characterised in that as stop means a spacer ring (14) is provided around the plasticising cylinder(17), and this spacer ring is arranged on the side of the carrying block (10) opposite to the nut (23) and is held on a locking ring (14a) which engages only slightly with the wall of the plasticising cylinder.

8. Plasticising cylinder according to one of the preceding claims, characterised in that in the area of the driving profile of the rotary motor (26) at least one rotatable slider (47), guided radially, is disposed, which through the axial movement of the drive can be moved into locking position via a driving bridge (44).

9. Injection-moulding unit according to claim 8, characterised in that two sliders (47), arranged diametrically in a guide member (45), can be moved radially and which can be moved by means of springs (48) into a radial opening (35b) of the feed worm (35) and can be disengaged from the coupled position by means of an expanding wedge (49) which is guided radially and activated by the driving bridge.

10. Injection-moulding unit according to claim 8 or 9, characterised in that the slides (47) can be activated via locking bolts (63) which go through the wall (46a) of a receiving means (46), being led on runner edges (44b) along almost the whole length when the feed worm is locked during the rotary movement, whilst penetrating in the unlocked position into openings (44c) of the driving bridge.

11. Injection-moulding unit according to one of the preceding claims characterised in that a further slider (39) is positioned on the plasticising cylinder (17) in such a way that it can move radially and on the downward movement of the spindle drive (18) via a driving bridge (43) with the aid of the force of a spring (41) locks the feed worm (35) axially and radially in the plasticising cylinder through contact with an opening(35c).

12. Injection-moulding unit according to one of the preceding claims, characterised in that at least one locking bolt (53) is provided which, on complete contact of the nut (23) on the carrying block (10), allows the axial movement of the drive.

13. Injection-moulding unit according to claim 12, characterised in that the axially moveable locking bolt (53) is connected with the plasticising cylinder (17) via an intermediate plate (52) and the axial movement of the plasticising cylinder (17) on tightening of the nut (23) brings the locking bolt (53) out of its stopping position via the intermediate plate (52) which is provided between the driving bridges (43, 44), connected to one another by bolts (50), said plate having disposed thereon the locking bolt (53), and being held in contact with the end of the plasticising cylinder (17) by the force of a spring (51).

## Revendications

1. Unité de moulage par injection de matières plastiques (S) avec dispositif de verrouillage automatisable pour verrouiller le cylindre de plastification (17) et la vis transporteuse (25) à mouvement axial au sein d'un bloc de support (10) de l'unité de moulage (S), et comprenant un moteur de rotation (26) pour la vis de transport engagé en liaison par une prise d'entraînement du moteur et qui est déplaçable axialement pour injection de la matière plastique, caractérisée en ce que
le cylindre de plastification (17) peut être maintenu fermement contre un appui du bloc de support (10) au moyen d'une liaison par filetage avec un écrou (23) symétrique par rapport à l'axe d'injection (s-s), cet écrou pouvant être actionné en sa périphérie par un entraînement; et en ce qu'un verrouillage de la vis de transport (35) est réalisé à la suite du verrouillage du cylindre de plastification (17).

2. Unité de moulage selon la revendication 1, caractérisée en ce que, suite au verrouillage du cylindre de plastification (17) par le serrage de l'écrou (23), il se produit le déverrouillage de la vis de transport (35) déplaçable au moyen d'un vérin hydraulique (Z) au sein du cylindre de plastification (17), ainsi que le verrouillage de la vis transporteuse (35) avec le moteur de rotation (26).

3. Unité de moulage selon la revendication 1 ou 2, caractérisée en ce que l'entraînement de l'écrou (23) est un entraînement à arbre ou un entraînement à vis sans fin (18) actionné par un moteur et engagé dans une denture (23a) de l'écrou (23) qui se déplace sur un filetage de verrouillage (17a) du cylindre de plastification.

4. Unité de moulage selon la revendication 3, caractérisée en ce que l'entraînement à vis sans fin est mobile axialement contre la force d'au moins un ressort (18a, 18f) comprimé suite au mouvement axial de la vis sans fin lors du blocage de l'écrou surmontant la force du ressort.

5. Unité de moulage selon les revendication 3 ou 4, caractérisée en ce que l'entraînement à vis sans fin (18) constitue avec le moteur (hydraulique 24) situé dans l'alignement une unité de construction qui effectue un mouvement de levée longitudinal sous la charge d'un élément d'amortissement (18e) pris entre deux ressorts d'amortissement, et en ce qu'il est réalisé simultanément le verrouillage de la vis de transport (35) avec le moteur de rotation (26), le déverrouillage de la vis de transport (35) au sein du cylindre de plastification (17) et, si désiré, le verrouillage d'une tige de commande (58) pour une aiguille d'un injecteur (D).

6. Unité de moulage selon l'une des revendications précédentes, caractérisée en ce que le mouvement longitudinal de l'entraînement à vis sans fin (18) s'effectue en surmontant la force d'un ressort (18f) d'un doigt de friction (18g) dès qu'une plaque de manoeuvre (18l) reliée perpendiculairement à la tige (18h) de l'entraînement par vis sans fin (18) amène le doigt de friction hors de prise.

7. Unité de moulage selon l'une des revendications précédentes, caractérisée en ce qu'un anneau d'écartement (14) entourant le cylindre de plastification (17) est prévu en tant qu'appui, cet anneau d'écartement étant disposé sur le côté du bloc de support (10) opposé à l'écrou (23), et étant retenu seulement par un mince anneau de sécurité (14a) pris dans la paroi du cylindre de plastification.

8. Cylindre de plastification selon l'une des revendications précédentes, caractérisé en ce qu'il est prévu au moins un tiroir (47) proche de la prise d'entraînement du moteur de rotation (26), entraîné en rotation et guidé radialement, lequel tiroir peut être amené en position de verrouillage par le mouvement axial de l'entraînement, et ce au travers d'un pont d'entraînement (44).

9. Unité de moulage selon la revendication 8, caractérisée en ce que deux tiroirs (47) diamétralement arrangés dans un élément de guidage (45) sont mobiles radialement, lesquels tiroirs peuvent être introduits dans un évidement radial (35b) de la vis de transport (35) sous l'action de ressorts (48), et qui peuvent être amenés hors d'accouplement au moyen d'une clavette d'écartement (49) mobile radialement actionnée par le pont d'entraînement.

10. Unité de moulage selon la revendication 8 ou 9, caractérisée en ce que les tiroirs (47) peuvent être actionnés par des boulons de sécurité (63) traversant les parois (46a) au travers de passages (46), ces boulons de sécurité étant guidés par des bordures de roulement (44b) sur pratiquement tout le parcours durant le mouvement de rotation avec la vis de transport verrouillée, lesdits boulons de sécurité pénétrant dans des évidements (44c) du pont d'entraînement en leur position déverrouillée.

11. Unité de moulage selon l'une des revendications précédentes, caractérisée en ce qu'un second tiroir (39) est mobile sous pression radialement par rapport au cylindre de plastification (17), lequel second tiroir verrouille la vis de transport (35) axialement et radialement dans le cylindre de plastification par engagement dans un évidement (35c) sous l'effet d'un ressort (41) suite au mouvement de retrait de l'entraînement de vis sans fin (18) se transmettant à un pont d'entraînement (43).

12. Unité de moulage selon l'une des revendications précédentes, caractérisée en ce qu'il est prévu au moins un bouton de sécurité (53) n'autorisant le mouvement axial de l'entraînement par vis sans fin que lorsque l'écrou (23) est entièrement en appui contre le bloc de support (10).

13. Unité de moulage selon la revendication 12, caractérisée en ce que le bouton de sécurité (53) mobile axialement est relié au cylindre de plastification (17) par une plaque intermédiaire (52), en ce que le mouvement axial du cylindre de plastification (17) de par le serrage de l'écrou 23 amène le bouton de sécurité (53) hors d'une position de verrouillage par l'intermédiaire de la plaque intermédiaire (52) sur laquelle sont disposés ces boutons de sécurité (53), cette plaque étant installée entre les ponts d'entraînement (43, 44) reliés entre eux par des boutons (50), cette plaque étant maintenue en appui contre l'extrémité du cylindre de plastification (17) par l'effet d'au moins un ressort (51).
